(19) Europäisches Patentamt
European Patent Office
Office européen des brevets

(11) EP 0 748 839 B1

(12) **EUROPÄISCHE PATENTSCHRIFT**

(45) Veröffentlichungstag und Bekanntmachung des Hinweises auf die Patenterteilung:
**09.05.2001 Patentblatt 2001/19**

(51) Int Cl.⁷: **C08K 5/54**, C08L 21/00

(21) Anmeldenummer: **96108899.4**

(22) Anmeldetag: **04.06.1996**

# (54) Oligomere Silane enthaltende Kautschukmischungen

Rubber compositions containing oligomeric silanes

Compositions de caoutchouc contenant des silanes oligomères

(84) Benannte Vertragsstaaten:
**DE ES FR GB IT**

(30) Priorität: **16.06.1995 DE 19521799**
**28.12.1995 DE 19549027**

(43) Veröffentlichungstag der Anmeldung:
**18.12.1996 Patentblatt 1996/51**

(73) Patentinhaber: **BAYER AG**
**51368 Leverkusen (DE)**

(72) Erfinder: **Scholl, Thomas, Dr.**
**51469 Bergisch Gladbach (DE)**

(56) Entgegenhaltungen:
**EP-A- 0 670 347**
**US-A- 4 709 065**
**US-A- 5 110 969**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 748 839 B1

Printed by Jouve, 75001 PARIS (FR)

## Beschreibung

Die vorliegende Erfindung betrifft neue oligomere Silane (I) enthaltende Kautschukmischungen sowie die Verwendung dieser Kautschukmischungen zur Herstellung von Kautschukvulkanisaten. Die erfindungsgemäßen Kautschukmischungen eignen sich zur Herstellung von Formkörpern, insbesondere zur Herstellung von Reifen, die einen niedrigen Rollwiderstand sowie eine erhöhte dynamische und thermische Belastbarkeit aufweisen.

Vulkanisate mit verbessertem Hystereseverhalten sind zwar bekannt, sie besitzen jedoch einige unerwünschte Eigenschaften. So werden in der EP 253 365 Hystereseverbesserer auf Basis bestimmter Nitroamine beschrieben. Wegen der Gefahr der Umnitrosierung besteht jedoch der Wunsch nach Kautschukhilfsmitteln, die frei von Nitro- und Nitrosogruppen sind. Ähnliche Bedenken bestehen auch bei den Nitrosoanilinen der US-PS 4 690 965. Aus der EP 366 952 sind weiterhin Kautschukvulkanisate bekannt mit verringerten Hystereseverlusten, die bestimmte Diphenylsulfide enthalten. Nachteilig ist, daß diese Additive in Naturkautschuk unwirksam sind und ihn darüberhinaus auch noch abbauen (siehe hierzu US-PS 2 470 948). In DE-OS 2 141 159, 2 141 160 und 2 255 577 sind bestimmte Organosilane beschrieben, die auch zur Verbesserung des Rollwiderstands von Kfz-Reifen eingesetzt werden können. Ziel der vorliegenden Erfindung war jedoch neben dem verringerten Rollwiderstand auch die thermische Belastbarkeit bei Herstellung und Gebrauch der Reifen sowie die dynamische Ermüdungsbeständigkeit zu verbessern. Dies wird mit den oligomeren Silanen der vorliegenden Erfindung erreicht.

DE-OS 2 265 382 beschreibt Polysulfidderivate zur Vernetzung von Kautschuk, die zu Vulkanisaten mit höherer thermischer Stabilität führen. Ähnliche Verbindungen beschreiben EP 385 072 und 530 590. Die mechanischen Eigenschaften der Vulkanisate erleiden jedoch Einbußen. Dies wird deutlich in der verminderten Zugfestigkeit und dem verschlechterten Abriebsverhalten. Die Verbindungen der EP 385 072 und 530 590 setzen zudem bei der Vulkanisation sekundäre Amine frei, die bei der Vulkanisation unerwünschte Nitrosamine bilden können.

Es wurde jetzt gefunden, daß mit Hilfe der erfindungsgemäßen oligomeren Silane (I) Vulkanisate mit geringerer dynamischer Dämpfung, verbesserter thermischer Belastbarkeit und verbesserter dynamischer Belastbarkeit erhalten werden können, so daß sich hieraus die Möglichkeit ergibt, Gummiartikel in kürzerer Zeit bei höherer Temperatur ohne Qualitätseinbußen herzustellen oder Gummiteile bei höheren Gebrauchstemperaturen über längere Zeit zu verwenden.

Gegenstand der vorliegenden Erfindung sind daher Kautschukmischungen enthaltend einen Kautschuk, einen Füllstoff, gegebenenfalls weitere Kautschukhilfsmittel, sowie mindestens ein Silan der Formel (I)

$$R^1R^2R^3\,Si - X^1 - (-\,S_x - Y -)_m - (-\,S_x - X^2 - Si\,R^1R^2R^3)_n \qquad (I),$$

worin

| | |
|---|---|
| $R^1$, $R^2$ und $R^3$ | gleich oder verschieden sind und für $C_1$-$C_{18}$-Alkyl- oder $C_1$-$C_{18}$-Alkoxireste stehen, die gegebenenfalls durch Sauerstoff, Stickstoff- oder Schwefelatome unterbrochen sein können, oder $C_6$-$C_{12}$-Aryl, -Aryloxi, $C_7$-$C_{18}$-Alkylaryl oder -Alkylaryloxi bedeuten, mit der Maßgabe, daß mindestens einer der Reste $R^1$ bis $R^3$ eine Alkoxi-, Aryloxi oder Alkylaryloxigruppe ist; |
| $X^1$ und $X^2$ | gleich oder verschieden sind und für lineare, verzweigte oder cyclische, gegebenenfalls ungesättigte, $C_1$-$C_{12}$-Alkylenreste stehen, |
| Y | für gegebenenfalls mit $C_6$-$C_{12}$-Aryl-, $C_1$-$C_8$-Alkoxi- oder Hydroxigruppen substituierte, lineare, verzweigte oder cyclische, gegebenenfalls ungesättigte, $C_1$-$C_{18}$-Alkylenreste steht, die gegebenenfalls durch Sauerstoff-, Schwefel, Stickstoffatome oder aromatische $C_6$-$C_{12}$-Gruppen unterbrochen sein können, sowie für $C_6$-$C_{12}$-Arylengruppen oder Heteroarylengruppen steht, |
| m | für eine ganze Zahl von 1 bis 20 steht, |
| n | für eine ganze Zahl von 1 bis 6 steht und |
| x | eine Zahl von 1 bis 6 bedeutet, |

wobei das Silan (I) in Mengen von 0,1 bis 15 Gew.-%, bezogen auf die Menge des jeweils eingesetzten Kautschuks, eingesetzt wird.

Besonders bevorzugte erfindungsgemäße Verbindungen sind z.B. solche der Formel (I), worin $X^1$ und $X^2$

Methylen-, Propylen-, Butylen-, Pentylen oder Hexylenreste und Y Methylen-, Ethylen-, Propylen-, Butylen-, Hexylen-, Cyclohexylen-, Octylen-, Decyclen-, Dodecyclen-, 2,2'-Oxidiethylen-, Methylen-bis-(2,2'-oxiethylen)-, Ethylen-(bis-2,2'-oxiethylen)-, 2,2'-Thiodiethylen-, N-Methyl-N',N''-diethylen- oder $\alpha,\alpha$-p-Xylidenreste oder Reste, wie 1,2,3-Propyliden-, N,N',N''-Triethylen- oder 1,3,5-s-Triazinylreste, darstellen, und in denen n ganze Zahlen von 1 bis 6, m ganze Zahlen von 1 bis 10 und x ganze Zahlen von 1 bis 6 bedeuten. Die erfindungsgemäßen Verbindungen können sowohl als einzelne Verbindung mit einem definierten Molgewicht als auch als Oligomerengemisch mit einer Molgewichtsverteilung vorliegen. Aus verfahrenstechnischen Gründen ist es in vielen Fällen einfacher, ein Oligomeren- oder Polymerengemisch herzustellen und anzuwenden. Die Verbindungen besitzen ein Molgewicht zwischen ca. 500 und 8 000.

Die Herstellung der erfindungsgemäßen Silane (I) kann auf verschiedene Weise erfolgen:

A: Durch Umsetzung von Mercaptogruppen-haltigen Silanen und Di-, und/oder Polymercaptanen mit Schwefeldichlorid oder Dischwefeldichlorid unter Abspaltung von HCl. Die Reaktion kann in an sich bekannter Art und Weise bei Temperaturen von -30 bis +80°C, gegebenenfalls in Lösungsmitteln, wie Alkoholen oder aromatischen Kohlenwasserstoffen, durchgeführt werden:

$$R^1R^2R^3Si\text{-}X\text{-}SH + HS\text{-}Y\text{-}SH + S_x\text{-}Cl_2 \rightarrow$$

$$R^1R^2R^3Si\text{-}X\text{-}S_{x+2}(Y\text{-}S_{x+2})_m\text{-}X\text{-}SiR^1R^2R^3 + HCl$$

Zur Durchführung der Reaktion siehe z.B. Houben Weyl, Methoden der organischen Chemie, Band 9, Seite 88 ff. (1955) und Band E 11 (1985), Thieme Verlag, Stuttgart.

B: In besonders vorteilhafter Weise gelingt die Herstellung der Verbindungen (I), wenn man Halogenalkylsilylether und Polyhalogenide mit Metallpolysulfiden in Gegenwart von alkoholischen Lösungsmitteln bei Temperaturen von -20 bis +120°C umsetzt:

$$R^1R^2R^3Si\text{-}X\text{-}Hal + Hal\text{-}Y\text{-}Hal + Na_2S_x \rightarrow$$

$$R^1R^2R^3Si\text{-}X\text{-}S_x(X\text{-}S_x)_m\text{-}X\text{-}SiR^1R^2R^3 + NaHal$$

Als Metallpolysulfide werden bevorzugt solche der Formel $Me_2S_x$ eingesetzt, in der Me für Lithium, Natrium oder Kalium steht und x eine Zahl von 2 bis 6 bedeutet.

Als Lösungsmittel werden bevorzugt Alkohole eingesetzt, wie z.B. Methanol, Ethanol, n-Propanol, i-Propanol, i-Butanol, Amylalkohol, Hexylalkohol, n-Octanol, i-Octanol, Ethylenglykol, 1,2- und 1,3-Propylenglykol, 1,4-Butandiol, 1,6-Hexandiol, sowie Gemische dieser Alkohole mit aromatischen, aliphatischen oder cycloaliphatischen Kohlenwasserstoffen, wie z.B. Toluol, Cyclohexan, Hexan, Octan, oder offenkettige oder cyclische Ether, wie z.B. Diethylether, Dibutylether, Tetrahydrofuran, 1,3-Dioxolan und deren Gemische mit Alkoholen.

Besonders bevorzugte Verbindungen (I) entsprechen den Formeln

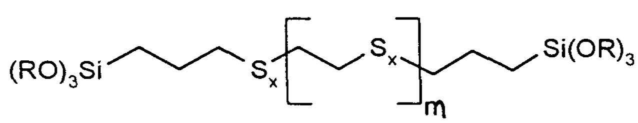 II,

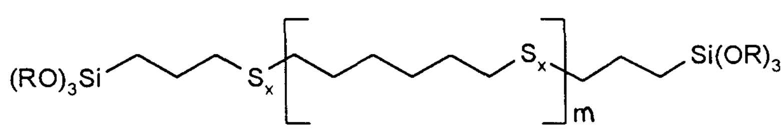 III,

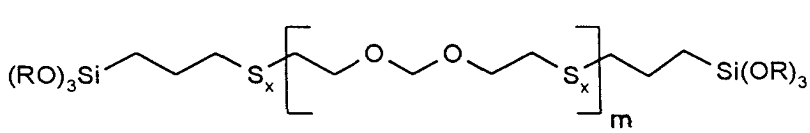 IV,

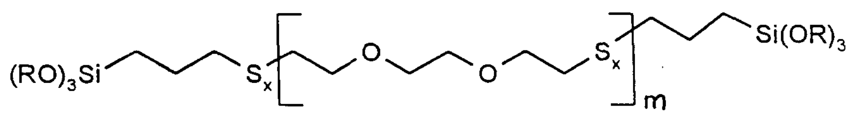 V,

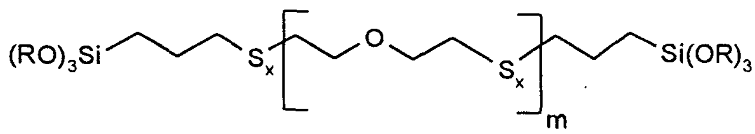 VI,

worin

R = $CH_3$, $C_2H_5$,
x = 1 - 6, m= 1 - 10 ist,

sowie

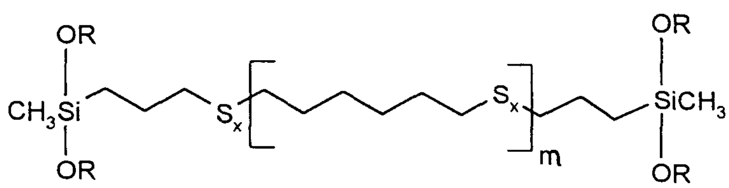 VIII,

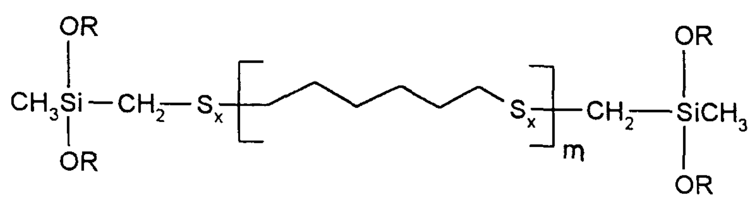 IX,

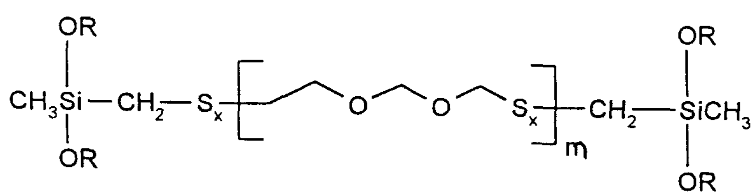 X,

worin

R = $CH_3$, $C_2H_5$

x =1 - 6

n = 1 - 10 ist.

Die Zugabe der erfindungsgemäßen oligomeren Silane der Formel (I) sowie die Zugabe der Füllstoffe erfolgt bevorzugt bei Massetemperaturen von 100 bis 200°C, sie kann jedoch auch später bei tieferen Temperaturen (40 bis 100°C) z.B. zusammen mit weiteren Kautschukhilfsmitteln erfolgen.

Die erfindungsgemäßen oligomeren Silane (I) können sowohl in reiner Form als auch aufgezogen auf einen inerten organischen oder anorganischen Träger dem Mischprozeß zugegeben werden. Bevorzugte Trägermaterialien

sind Kieselsäuren, natürliche oder synthetische Silikate, Aluminiumoxid oder Ruße.

Als Füllstoffe kommen für die erfindungsgemäßen Kautschukmischungen in Frage:

- Ruße. Die hierbei zu verwendenden Ruße sind nach dem Flammruß-, Furnace- oder Gasruß-Verfahren hergestellt und besitzen BET-Oberflächen von 20 bis 200 $m^2/g$, wie z.B. SAF-, ISAF-, IISAF-, HAF-, FEF- oder GPF-Ruße.

- hochdisperse Kieselsäuren, hergestellt z.B. durch Fällung von Lösungen von Silikaten oder Flammenhydrolyse von Siliciumhalogeniden mit spezifischen Oberflächen von 5 bis 1 000, vorzugsweise 20 bis 400 $m^2/g$ (BET-Oberfläche) und mit Primärteilchengrößen von 10 bis 400 nm. Die Kieselsäuren können gegebenenfalls auch als Mischoxide mit anderen Metalloxiden, wie Al-, Mg-, Ca-, Ba-, Zn- und Tioxiden vorliegen.

- Synthetische Silikate, wie Aluminiumsilikat, Erdalkalisilikate wie Magnesiumsilikat oder Calciumsilikat, mit BET-Oberflächen von 20 bis 400 $m^2/g$ und Primärteilchendurchmessern von 10 bis 400 nm.

- Natürliche Silikate, wie Kaolin und andere natürlich vorkommende Kieselsäuren.

- Glasfasern und Glasfaserprodukte (Matten, Stränge) oder Mikroglaskugeln.

Bevorzugt werden Ruße mit BET-Oberflächen von 20 bis 400 $m^2/g$ oder hochdisperse Kieselsäuren, hergestellt durch Fällung von Lösungen von Silikaten, mit BET-Oberflächen von 20 bis 400 $m^2/g$ in Mengen von 5 bis 150 Gew.-Teilen, jeweils bezogen auf 100 Teile Kautschuk, eingesetzt.

Die genannten Füllstoffe können alleine oder im Gemisch eingesetzt werden. In einer besonders bevorzugten Ausführung des Verfahrens werden 10 bis 150 Gew.-Teile helle Füllstoffe, gegebenenfalls zusammen mit 0 bis 100 Gew.-Teilen Ruß, sowie 0,3 bis 10 Gew.-Teile einer Verbindung der Formel (I), jeweils bezogen auf 100 Gew.-Teile Kautschuk, zur Herstellung der Mischungen eingesetzt.

Für die Herstellung erfindungsgemäßer Kautschukmischungen eignen sich neben Naturkautschuk auch Synthesekautschuke. Bevorzugte Synthesekautschuke sind beispielsweise bei W. Hofmann, Kautschuktechnologie, Gentner Verlag, Stuttgart 1980, beschrieben. Sie umfassen u.a.

| | |
|---|---|
| BR - | Polybutadien |
| ABR - | Butydien/Acrylsäure-$C_{1-4}$-alkylester-Copolymere |
| IR - | Polyisopren |
| SBR | - Styrol/Butadien-Copolymerisate mit Styrolgehalten von 1 bis 60, vorzugsweise 2 bis 50 Gew.-% |
| XSBR - | Styrol/Butadien-Copolymerisate und Pfropfpolymerisate mit weiteren ungesättigten polaren Monomeren, wie z.B. Acrylsäure, Methacrylsäure, Acrylnitril, Hydroxiethylacrylat, Hydroxiethylmethacrylat etc. mit Styrolgehalten von 2-50 Gew.-% und Gehalten an einpolymerisierten polaren Monomeren von 1-30 Gew.-% |
| IIR - | Isobutylen/Isopren-Copolymerisate |
| NBR - | Butadien/Acrylnitril-Copolymere mit Acrylnitrilgehalten von 5 bis 60, vorzugsweise 10 bis 50 Gew.-% |
| HNBR - | teilhydrierter oder vollständig hydrierter NBR-Kautschuk |
| EPDM - | Ethylen/Propylen/Dien-Copolymerisate |

sowie Mischungen dieser Kautschuke. Für die Herstellung von Kfz-Reifen sind insbesondere anionisch polymerisierte L-SBR-Kautschuke mit einer Glastemperatur oberhalb von -50°C, die gegebenenfalls mit Silylethern oder anderen funktionellen Gruppen, modifiziert sein können, wie sie z.B. in der EP-A 447 066 beschrieben sind, sowie deren Mischungen mit Dienkautschuken von Interesse.

Die erfindungsgemäßen Kautschukvulkanisate können weitere Kautschukhilfsprodukte enthalten wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, Tenside, Emulgatoren, schwefelfreie Silylether, Polysiloxane, hydroxylgruppenhaltige Polydimethylsiloxane, organische Säuren, Verzögerer, Metalloxide sowie Aktivatoren, wie Triethanolamin, Polyethylenglykol, Hexantriol, die der Gummiindustrie bekannt sind.

Die Kautschukhilfsmittel werden in üblichen Mengen, die sich unter anderem nach dem Verwendungszweck richten, eingesetzt. Übliche Mengen sind z.B. Mengen von 0,1 bis 50 Gew.-% bezogen auf Kautschuk.

Die oligomeren Silane können alleine als Vernetzer dienen. Im Falle von Ruß als alleinigem Füllstoff oder bei Verwendung von solchen Silanen der Formel I, die nicht in DE-A 4 406 947.2 genannt werden, empfiehlt sich auch die Zugabe von weiteren Vernetzern. Als weitere bekannte Vernetzer können Schwefel oder Peroxide eingesetzt werden. Die erfindungsgemäßen Kautschukmischungen können darüber hinaus Vulkanisationsbeschleuniger enthalten. Beispiele für geeignete Vulkanisationsbeschleuniger sind Mercaptobenzthiazole, -sulfenamide, Guanidine, Thiurame, Dithiocarbamate, Thioharnstoffe und Thiocarbonate. Die Vulkanisationsbeschleuniger und (im Falle von Ruß) Schwefel

oder Peroxide werden in Mengen von 0,1 bis 10 Gew.-%, bevorzugt 0,1 bis 5 Gew.-%, bezogen auf Kautschuk, eingesetzt.

Die Vulkanisation der erfindungsgemäßen Kautschukmischungen kann bei Temperaturen von 100 bis 200°C, bevorzugt 130 bis 180°C, gegebenenfalls unter Druck von 10 bis 200 bar erfolgen.

Die Abmischung der Kautschuke mit dem Füllstoff, gegebenenfalls Kautschukhilfsmitteln und den erfindungsgemäßen oligomeren Silanen (I) kann in üblichen Mischaggregaten, wie Walzen, Innenmischern und Mischextrudern, durchgeführt werden.

Die erfindungsgemäßen Kautschukvulkanisate eignen sich zur Herstellung von Formkörpern, z.B. für die Herstellung von Kabelmänteln, Schläuchen, Treibriemen, Förderbändern, Walzenbelägen, Reifen, Schuhsohlen, Dichtungsringen und Dämpfungselementen.

## Beispiele

### Beispiel 1

$$(EtO)_3Si\text{-}CH_2CH_2CH_2\text{-}(S_4\text{-}CH_2CH_2\text{-}O\text{-}CH_2\text{-}O\text{-}CH_2CH_2)_n\text{-}S_4\text{-}CH_2CH_2CH_2\text{-}Si(OEt)_3$$

mit ñ = 2

117 g (1,5 mol) wasserfreies $Na_2S$ wurde mit 144 g (4,5 mol) Schwefel in einem Lösungsmittelgemisch aus 400 ml Ethanol und 400 ml Toluol 1 Stunde zum Rückfluß erhitzt. Dann setzte man erst 240,4 g (1 mol) 3-Chlorpropyltriethoxisilan und nach einer Stunde Erhitzen am Rückfluß 173,0 g (1 mol) Bis-(2-chlorethyl-)-formal hinzu. Nach 10stündigem Nachrühren wurde filtriert und die Lösung im Vakuum eingedampft. Man erhielt 475 g eines braunen Öls mit einer Viskosität von 200 mPa·s (25°C).

| Elementaranalyse: | | | | | |
|---|---|---|---|---|---|
| | C | H | S | Si | |
| ber. | 33,7 | 6,2 | 38,5 | 5,8 | % |
| gef. | 33,4 | 6,3 | 39,0 | 5,3 | % |

### Beispiel 2

$$(EtO)_3Si\text{-}CH_2CH_2CH_2\text{-}(S_4\text{-}CH_2CH_2\text{-}O\text{-}CH_2\text{-}O\text{-}CH_2CH_2)_n\text{-}S_4\text{-}CH_2CH_2CH_2\text{-}Si(OEt)_3$$

mit ñ = 3

Es wurde wie in Beispiel 1 verfahren. Man setzte dabei 117 g (1,5 mol) wasserfreies Natriumsulfid mit 144 g (4,5 mol) Schwefel, 183,9 g (0,765 mol) 3-Chlorpropyltriethoxisilan und 197,5 g (1,142 mol) Bis-(2-chlorethyl-)formal um. Man erhielt 453 g eines braunen Öls mit der Viskosität 500 mPa·s (25°C).

| Elementaranalyse: | | | | | |
|---|---|---|---|---|---|
| | C | H | S | Si | |
| ber. | 32,2 | 5,9 | 41,7 | 4,6 | % |
| gef. | 32,4 | 5,9 | 41,2 | 4,4 | % |

### Beispiel 3

$$(EtO)_3Si\text{-}CH_2CH_2CH_2\text{-}(S_4\text{-}CH_2CH_2\text{-}O\text{-}CH_2\text{-}O\text{-}CH_2CH_2)_n\text{-}S_4\text{-}CH_2CH_2CH_2\text{-}Si(OEt)_3$$

mit ñ = 4

Es wurde wie in Beispiel 1 verfahren. Dabei setzte man 97,5 g (1,25 mol) wasserfreies Natriumsulfid mit 120 g (3,75 mol) Schwefel, 120 g (0,5 mol) 3-Chlorpropyltriethoxisilan und 173 g (1 mol) Bis-(2-chlorethyl-)formal um. Man erhielt 351 g eines braunen Öls mit der Viskosität 880 mPa·s (25°C).

| Elementaranalyse: | | | | | |
|---|---|---|---|---|---|
| | C | H | S | Si | |
| ber. | 31,3 | 5,6 | 43,9 | 3,8 | % |
| gef. | 31,3 | 5,6 | 41,6 | 4,0 | % |

**Beispiel 4**

$$(EtO)_3Si\text{-}CH_2CH_2CH_2(S_4\text{- }CH_2CH_2\text{-}O\text{-}CH_2CH_2\text{-}O\text{-}CH_2CH_2)_n\text{-}S_4\text{-}CH_2CH_2CH_2\text{-}Si(OEt)_3$$

mit ñ = 2

Es wurde wie in Beispiel 1 verfahren. Dabei setzte man 58,5 g (0,75 mol) wasserfreies Natriumsulfid in 500 ml Ethanol mit 72 g (2,25 mol) Schwefel, 120,2 g (0,5 mol) 3-Chlorpropyltriethoxisilan und 93,5 g (0,5 mol) 1,2-Bis-chlorethoxiethan um. Man erhielt 223 g eines braunen Öls.

| Elementaranalyse: | | | | | |
|---|---|---|---|---|---|
| | C | H | S | Si | |
| ber. | 35,1 | 6,4. | 37,4 | 5,5 | % |
| gef. | 35,3 | 6,5 | 36,5 | 6,0 | % |

**Beispiel 5**

$$(EtO)_3Si\text{-}CH_2CH_2CH_2\text{-}(S_4\text{-}CH_2CH_2\text{-}CH_2CH_2\text{-}CH_2CH_2)_n\text{-}S_4\text{-}CH_2CH_2CH_2\text{-}Si(OEt)_3$$

mit ñ = 3

Es wurde wie in Beispiel 1 verfahren. Dabei setzte man 234 g (3 mol) wasserfreies Natriumsulfid in 1020 ml Ethanol und 441 ml Toluol mit 288 g (9 mol) Schwefel, 367,8 g (1,53 mol) 3-Chlorpropyltriethoxisilan und 355,9 g (2,295 mol) 1,6-Dichlorhexan um. Man erhielt 861 g eines braunen Öls.

| Elementaranalyse: | | | | | |
|---|---|---|---|---|---|
| | C | H | S | Si | |
| ber. | 36,8 | 6,6 | 43,6 | 4,8 | % |
| gef. | 36,7 | 6,5 | 43,2 | 4,7 | % |

**Beispiel 6** (Herstellung von Kautschukmischungen und Vulkanisaten)

Die folgenden Mischungen wurden innerhalb von 5 Minuten bei 140°C in einem Innenmischer hergestellt. Zum Schluß wurden bei 50°C Schwefel und Beschleuniger sowie die Produkte der Formel 1 zugemischt.

| | A* | B* | C | D | E | F |
|---|---|---|---|---|---|---|
| E-SBR Buna EM 1712 (HÜLS) | 103 | 103 | 103 | 103 | 103 | 103 |

* Vergleichsbeispiel

(fortgesetzt)

| | A* | B* | C | D | E | F |
|---|---|---|---|---|---|---|
| E-SBR Buna EM 1500 (HÜLS) | 25 | 25 | 25 | 25 | 25 | 25 |
| Ruß N339 | 80 | 80 | 80 | 80 | 80 | 80 |
| Stearinsäure | 2 | 2 | 2 | 2 | 2 | 2 |
| Zinkoxid | 5 | 5 | 5 | 5 | 5 | 5 |
| Antiozonant Vulkanox 4020 (Bayer) | 1 | 1 | 1 | 1 | 1 | 1 |
| Antioxidans Vulkanox HS (Bayer) | 1 | 1 | 1 | 1 | 1 | 1 |
| Schwefel | 1,5 | 1,2 | 1,2 | 1,2 | 0 | 0 |
| CBS, Vulkacit CZ (Bayer) | 1,2 | | | | | |
| Bis (triethoxysilyl-propyl)tetrasulfid gemäß DE-OS 2 255 577 | 0 | 1 | 0 | 0 | 0 | 0 |
| Verbindung gem. Bsp. 2 | 0 | 0 | 1 | 0 | 2 | 0 |
| Verbindung gem. Bsp. 5 | 0 | 0 | 0 | 1 | 0 | 2 |
| Höhe des Drehmoments nach 45 min bei 190°C (in Prozent vom Maximum) nach DIN 53 529 | 84 | 90 | 96 | 96 | 100 | 100% |

* Vergleichsbeispiel

Das Vulkanisationsverhalten der Kautschukmischungen wurde anschließend in einem Frank-Vulkameter DIN 53 529, System Bayer, bei 190°C untersucht. In der Tabelle wird die Höhe des Drehmomentes nach 45 Minuten als Prozentangabe vom Maximum angegeben. Hohe Werte entsprechen daher thermisch stabilen Vulkanisaten, niedrige Werte stehen für thermisch labile Vulkanisate: Es wird deutlich, daß mit den erfindungsgemäßen Verbindungen sichtbare Vorteile hinsichtlich der thermischen Belastbarkeit zu erzielen sind.

**Beispiel 7**

Die folgenden Kautschukmischungen wurden innerhalb von 5 Minuten bei 140°C im Innenmischer hergestellt. Nach dem Erkalten wurde die Mischungen nochmals im Innenmischer 3 Minuten geknetet. Zum Schluß wurden bei 50°C die Beschleuniger N-Cyclohexyl-mercaptobenzthiazolsulfenamid (Vulkacit CZ), Diphenylguanidin (Vulkacit D) und Tetrabenzylthiuramdisulfid zugemischt. Die Vulkanisation erfolgt bei 160°C in 40 Minuten.

| | G | H* |
|---|---|---|
| **Mischungsbestandteile:** | | |
| L-SBR Buna VSL 1954 S 25 (Bayer) | 75 | 75 |
| BR Buna CB 11 (Bayer) | 25 | 25 |
| Kieselsäure Vulkasil S (Bayer) | 80 | 80 |
| Ruß Corax N 339 | 6 | 6 |
| aromatisches Öl Renopal 450 (Rheinchemie) | 32,5 | 32,5 |
| Zinkoxid | 2,5 | 2,5 |
| Antiozonant Vulkanox 4020 (Bayer) | 1 | 1 |
| Ozonschutzwachs Antilux 654 (Rheinchemie) | 1,5 | 1,5 |
| Verbindung gemäß Beispiel 2 | 6,5 | - |
| Bis-(triethoxisilyl-propyl)-tetrasulfid gemäß DE-OS 2 255 577 | - | 6,5 |
| N-Cyclohexyl-mercaptobenzthiazolsulfenamid Vulkacit CZ (Bayer) | 1,5 | 1,5 |
| Tetrabenzylthiuramdisulfid Perkacit TBzTD (Akzo) | 0,2 | 0,2 |
| Diphenylguanidin Vulkacit D (Bayer) | 2 | 2 |
| **Vulkanisationskinetik:** | | |
| Monsanto MDR 2000 160°C | | |
| t-06 (Minuten) | 3,2 | 6,6 |
| t-90 (Minuten) | 18,7 | 16,2 |

* Vergleichsbeispiel

(fortgesetzt)

| | G | H* |
|---|---|---|
| **Vulkanisateigenschaften:** | | |
| Vulkanisation bei 160°C / 40 Minuten | | |
| Spannungswert bei 100 % Dehnung (MPa) | 2,4 | 1,8 |
| Spannungswert bei 300 % Dehnung (MPa) | 7,5 | 4,9 |
| Zugfestigkeit (MPa) | 18,1 | 14,4 |
| Bruchdehnung (%) | 610 | 685 |
| Härte 23°C (Shore A) | 68 | 62 |
| Härte 70°C (Shore A) | 62 | 51 |
| Elastizität bei 23°C (%) | 25 | 24 |
| Elastizität bei 70°C (%) | 41 | 38 |
| Abrieb (DIN 53 516) | 98 | 105 |
| tan delta bei 60°C | 0,15 | 0,184 |

* Vergleichsbeispiel

Anhand der physikalischen Meßwerte wird deutlich, daß die erfindungsgemäße Verbindung erheblich effektiver bei der Kautschukvulkanisation wirkt als die Vergleichsverbindung.

**Patentansprüche**

**1.** Kautschukvulkanisate, hergestellt aus Kautschukmischungen, enthaltend einen Kautschuk, einen Füllstoff, gegebenenfalls weitere Kautschukhilfsmittel, sowie mindestens ein Silan der Formel (I)

$$R^1R^2R^3\ Si - X^1 - (- S_x - Y -)_m - (- S_x - X^2 - Si\ R^1R^2R^3)_n \quad (I),$$

worin

$R^1$, $R^2$ und $R^3$ gleich oder verschieden sind und für $C_1$-$C_{18}$-Alkyl- oder $C_1$-$C_{18}$-Alkoxireste stehen, die gegebenenfalls durch Sauerstoff, Stickstoff- oder Schwefelatome unterbrochen sein können, oder $C_6$-$C_{12}$- Aryl, -Aryloxi, $C_7$-$C_{18}$-Alkylaryl oder -Alkylaryloxi bedeuten, mit der Maßgabe, daß mindestens einer der Reste $R^1$ bis $R^3$ eine Alkoxi-,Aryl oxi - oder Alkylaryloxigruppe ist;

$X^1$ und $X^2$ gleich oder verschieden sind und für lineare, verzweigte oder cyclische, gegebenenfalls ungesättigte, $C_1$-$C_{12}$-Alkylenreste stehen,

Y für gegebenenfalls mit $C_6$-$C_{12}$-Aryl-, $C_1$-$C_8$-Alkoxi- oder Hydroxigruppen substituierte, lineare, verzweigte oder cyclische, gegebenenfalls ungesättigte, $C_1$-$C_{18}$-Alkylenreste steht, die gegebenenfalls durch Sauerstoff-, Schwefel, Stickstoffatome oder aromatische $C_6$-$C_{12}$-Gruppen unterbrochen sein können, sowie für $C_6$-$C_{12}$-Arylengruppen oder Heteroarylengruppen steht,

m für eine ganze Zahl von 1 bis 20 steht,

n für eine ganze Zahl von 1 bis 6 steht und

x eine Zahl von 1 bis 6 bedeutet,

wobei das Silan (I) in Mengen von 0,1 bis 15 Gew.-%, bezogen auf die Menge des jeweils eingesetzten Kautschuks, eingesetzt wird. und wobei die Kautschukmischungen keine zusätzlichen Vernetzer enthalten.

**2.** Verwendung der Kautschukmischungen gemäß Anspruch 1 zur Herstellung von Kautschukvulkanisaten.

**3.** Verwendung der Kautschukvulkanisate gemäß Anspruch 1 zur Herstellung von Reifen.

**Claims**

**1.** Rubber vulcanisates, manufactured from rubber compounds containing a rubber, a filler, optionally other rubber auxiliaries, and at least one silane corresponding to formula (I)

$$R^1R^2R^3\,Si - X^1 - (- S_x - Y - )_m - (- S_x - X^2 - Si\,R^1R^2R^3)_n \qquad (I)$$

wherein

$R^1$, $R^2$ and $R^3$ are the same or different and stand for $C_1$-$C_{18}$ alkyl or $C_1$-$C_{18}$ alkoxy groups which may optionally be interrupted by oxygen, nitrogen or sulfur atoms, or represent $C_6$-$C_{12}$ aryl, aryloxy, $C_7$-$C_{18}$ alkylaryl or alkylaryloxy, provided that at least one of the groups $R^1$ to $R^3$ is an alkoxy, aryloxy or alkylaryloxy group;

$X^1$ and $X^2$ are the same or different and stand for linear, branched or cyclic, optionally unsaturated, $C_1$-$C_{12}$ alkylene groups,

Y stands for linear, branched or cyclic, optionally unsaturated $C_1$-$C_{18}$ alkylene groups, that are optionally substituted with $C_6$-$C_{12}$ aryl, $C_1$-$C_8$ alkoxy or hydroxy groups and may optionally be interrupted by oxygen, sulfur or nitrogen atoms or aromatic $C_6$-$C_{12}$ groups, as well as for $C_6$-$C_{12}$ arylene groups or heteroarylene groups,

m stands for an integer from 1 to 20,

n stands for an integer from 1 to 6 and

x represents a number from 1 to 6,

wherein the silane (I) is used in amounts from 0.1 wt.% to 15 wt.%, relative to the amount of the rubber used in each case and wherein the rubber compounds contain no additional crosslinking agents.

**2.** The use of the rubber compounds according to claim 1 for the manufacture of rubber vulcanisates.

**3.** The use of the rubber vulcanisates according to claim 1 for the manufacture of tyres.

**Revendications**

**1.** Caoutchouc vulcanisé préparé à partir de mélanges de caoutchouc contenant un caoutchouc, une charge, éventuellement d'autres additifs de caoutchoucs, ainsi qu'au moins un silane de formule

$$R^1R^2R^3Si - X^1 - (- S_x - Y - )_m - (- S_x - X^2 - SiR^1R^2R^3)_n \qquad (I),$$

dans laquelle

$R^1$, $R^2$ et $R^3$ sont identiques ou différents et représentent des restes alkyle en $C_1$-$C_{18}$ ou alcoxy en $C_1$-$C_{18}$ pouvant éventuellement être interrompus par des atomes d'oxygène, d'azote ou de soufre, ou des restes aryle ou aryloxy en $C_6$-$C_{12}$, ou des restes alkylaryle ou alkylaryloxy en $C_7$-$C_{18}$, à condition qu'au moins l'un des restes $R^1$ à $R^3$ soit un groupe alcoxy, aryloxy ou alkylaryloxy;

$X^1$ et $X^2$ sont identiques ou différents et représentent des restes alkylène en $C_1$-$C_{12}$ linéaires, ramifiés

ou cycliques, éventuellement insaturés;

Y représente des restes alkylène en $C_1$-$C_{18}$ linéaires, ramifiés ou cycliques, éventuellement insaturés, éventuellement substitués par des groupes aryle en $C_6$-$C_{12}$, alcoxy en $C_1$-$C_8$ ou hydroxy, et pouvant éventuellement être interrompus par des atomes d'oxygène, de soufre ou d'azote ou par des groupes aromatiques en $C_6$-$C_{12}$, ou représente des groupes arylène en $C_6$-$C_{12}$ ou hétéroarylène;

m représente un nombre entier de 1 à 20;

n représente un nombre entier de 1 à 6 et

x est un nombre de 1 à 6,

le silane (I) étant utilisé en des quantités de 0,1 à 15 % en masse par rapport à la quantité du caoutchouc utilisé, et les mélanges de caoutchouc ne contenant pas d'autre agent réticulant.

**2.** Utilisation des mélanges de caoutchouc selon la revendication 1 pour la préparation de caoutchoucs vulcanisés.

**3.** Utilisation des caoutchoucs vulcanisés selon la revendication 1 pour la fabrication de pneus.